(19) Europäisches Patentamt
European Patent Office
Office européen des brevets

(11) **EP 4 675 697 A1**

(12) **EUROPEAN PATENT APPLICATION**
published in accordance with Art. 153(4) EPC

(43) Date of publication:
**07.01.2026 Bulletin 2026/02**

(21) Application number: **24764233.3**

(22) Date of filing: **14.02.2024**

(51) International Patent Classification (IPC):
**H01M 4/133** (2010.01)   **H01M 4/36** (2006.01)
**H01M 10/052** (2010.01)   **H01M 4/02** (2006.01)

(52) Cooperative Patent Classification (CPC):
**H01M 4/02; H01M 4/133; H01M 4/36;
H01M 10/052;** Y02E 60/10

(86) International application number:
**PCT/KR2024/095124**

(87) International publication number:
**WO 2024/181834 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 KR 20230026872**

(71) Applicant: **SK On Co., Ltd.
Seoul 03161 (KR)**

(72) Inventors:
• **MOON, Gi Hyeon
  Daejeon 34124 (KR)**
• **KIM, Hyeon A
  Daejeon 34124 (KR)**
• **LEE, Jong Hyuk
  Daejeon 34124 (KR)**

(74) Representative: **Stolmár & Partner
Patentanwälte PartG mbB
Blumenstraße 17
80331 München (DE)**

(54) **SECONDARY BATTERY ELECTRODE AND SECONDARY BATTERY INCLUDING SAME**

(57)    According to exemplary embodiments, an electrode for a lithium secondary battery includes an electrode current collector, an electrode active material layer formed on the electrode current collector and including an electrode active material, and a coating layer formed on the electrode active material layer. The average value, obtained by measuring the arithmetic average roughness 15 times within a scan range of 0.5 $\mu$m $\times$ 0.5 $\mu$m on an outer surface of the coating layerusing an atomic force microscope (AFM), and then removing the maximum and minimum values, is 30 nm or less.

[FIG. 1]

EP 4 675 697 A1

**Description**

[Technical Field]

The disclosure of the present application relates to an electrode for a lithium secondary battery and a lithium secondary battery including the same. More specifically, the present disclosure relates to an electrode for a secondary battery that includes a coating material and a lithium secondary battery including the electrode.

[Background Art]

The scope of application of lithium secondary batteries is expanding from small electronic devices to large electronic devices, automobiles, and other applications. Accordingly, lithium secondary batteries capable of maintaining improved performance under room temperature, high-temperature, and low-temperature environments are being widely developed.

For example, a lithium secondary battery may include: an anode including an anode active material capable of intercalating and deintercalating lithium ions; a cathode including a cathode active material capable of intercalating and deintercalating lithium ions; and a non-aqueous electrolyte including a lithium salt and an organic solvent.

For example, during the initial operation of the lithium secondary battery, side reactions between the anode and the electrolyte may cause a solid electrolyte interphase (SEI) to form on the electrode surface. This formation may result in the consumption of lithium ions, thereby leading to a loss of battery capacity, and gas generation, which may cause the lithium secondary battery to swell.

[Summary of Invention]

[Problems to be Solved by Invention]

An object of the present disclosure is to provide an electrode for a lithium secondary battery with improved capacity properties and cycle life properties.

Another object of the present disclosure is to provide a lithium secondary battery with improved capacity properties and cycle life properties.

[Means for Solving Problems]

An electrode for a lithium secondary battery according to exemplary embodiments includes: an electrode current collector; an electrode active material layer formed on the electrode current collector and comprising an electrode active material; and a coating layer formed on the electrode active material layer, wherein the electrode satisfies Equation 1 below:

$$[\text{Equation 1}]$$

$$R_a \leq 30 \text{ nm}$$

(in Equation 1, $R_a$ is an average value obtained by measuring the arithmetic average roughness 15 times within a scan range of 0.5 $\mu$m $\times$ 0.5 $\mu$m on an outer surface of the coating layer using an atomic force microscope (AFM), and then removing the maximum and minimum values).

In some embodiments, the coating layer may be in direct contact with the electrode active material layer.

In some embodiments, the coating layer may be discontinuously formed on the surface of the electrode active material layer.

In some embodiments, the electrode active material may include a plurality of active material particles and a coating portion formed on surfaces of the active material particles, and the coating layer may be formed by the coating portion exposed on an outer surface of the electrode active material layer.

In some embodiments, the active material particles may include graphite-based particles.

In some embodiments, the coating layer may have a thickness of 1 to 10,000 nm.

In some embodiments, the electrode for a lithium secondary battery may satisfy Equation 2 below:

[Equation 2]

$$R_a \leq 25 \text{ nm}$$

(in Equation 2, $R_a$ is an average value obtained by measuring the arithmetic average roughness 15 times within a scan range of 0.5 $\mu$m $\times$ 0.5 $\mu$m on the outer surface of the coating layerusing an atomic force microscope (AFM), and then removing the maximum and minimum values)

In some embodiments, the coating layer may include at least one coating material selected from the group consisting of a polymer, an alkali metal salt, and a compound excluding the alkali metal salt.

In some embodiments, the polymer may include at least one of polyvinyl alcohol (PVA), polyethyleneoxide (PEO), polyvinylidene fluoride (PVDF), polyoxazoline (POZ), polymethyl methacrylate (PMMA), Nafion, poly(diallyldimethylammonium chloride) (PDDA), polystyrene sulfonate (PSS), polyethyleneimine (PEI), polyacrylamide (PAM), polystyrene (PS), polyacrylic acid (PAA), polyvinylpyridine and polyvinylpyrrolidone (PVP).

In some embodiments, the alkali metal salt may include at least one of $LiCl$, $LiF$, $LiI$, $LiPO_4$, $LiBO_2$, $LiIO_2$, $Li_2CO_3$, $Li_2B_4O_7$, $Li_2SO_4$, $LiPF_6$, $LiBF_4$, $LiSbF_6$, $LiAsF_6$, $LiClO_4$, $LiCF_3SO_3$, $LiN(SO_2F)_2$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $C_7H_5LiO_2$ (lithium benzoate), $LiAlO_4$ and $LiAlCl_4$.

In some embodiments, the compound excluding the alkali metal salt may include at least one of $Al(NO_3)_3$, aluminum oxide, zinc nitride, boron trioxide, ascorbic acid, crown ether and tannic acid.

In some embodiments, the content of the coating material may be 0.01 to 5% by weight based on the total weight of the electrode active material.

In some embodiments, the coating layer may include the polymer, and the content of the polymer may be 0.01 to 2% by weight based on the total weight of the electrode active material.

In some embodiments, the coating layer may further include the alkali metal salt or a compound excluding the alkali metal salt, and the content of the alkali metal salt or the compound excluding the alkali metal salt may be 0.05 to 1% by weight based on the total weight of the electrode active material.

A lithium secondary battery according to exemplary embodiments includes an anode and a cathode disposed to face the anode, wherein at least one of the anode and the cathode is the above-described electrode for a lithium secondary battery.

[Advantageous effects]

In exemplary embodiments, the electrode for a lithium secondary battery may include a coating layer having a predetermined surface roughness $(R_a)$ as measured by a specific method. Such a configuration may reduce side reactions between the electrode and the electrolyte, and suppress the formation of a solid electrolyte interphase (SEI), thereby increasing initial efficiency and reducing gas generation.

In exemplary embodiments, the coating layer may have a thickness of 1 to 10,000 nm. Accordingly, side reactions between the electrode and the electrolyte may be suppressed, and the cycle life properties during high-rate charging may be improved.

[Brief Description of Drawings]

FIG. 1 is a schematic cross-sectional view illustrating an electrode according to an exemplary embodiment.
FIGS. 2 and 3 are schematic plan and cross-sectional views, respectively, illustrating a lithium secondary battery according to exemplary embodiments.
FIG. 4 is a graph showing the gas generation amounts of lithium secondary batteries according to Examples 1 and 2 and Comparative Examples 1 and 2.

[Mode for Carrying out Invention]

An electrode for a lithium secondary battery according to exemplary embodiments may include an electrode current collector, an electrode active material layer formed on the electrode current collector and including an electrode active material, and a coating layer formed on the electrode active material layer, and may satisfy Equation 1 below.

[Equation 1]

$$R_a \leq 30 \text{ nm}$$

In Equation 1, $R_a$ may be an average value obtained by measuring the arithmetic average roughness 15 times within a scan range of 0.5 $\mu$m $\times$ 0.5 $\mu$m on an outer surface of the coating layerusing an atomic force microscope (AFM), and then removing the maximum and minimum values.

The term "arithmetic average roughness" as used herein may refer to the value obtained by Equation A below and expressed in micrometers ($\mu$m). This value is determined by expressing the roughness curve as a function y = f(x), where the average line direction is taken as the x-axis and the height direction as the y-axis, after extracting a reference length L from the roughness curve in the direction of the average line:

[Equation A]

$$Arithmetic \ mean \ roughness = \frac{1}{L} \int_0^L |f(x)| dx$$

The lithium secondary battery according to exemplary embodiments may include the above-described electrode.

Hereinafter, the electrode for a secondary battery and the secondary battery according to exemplary embodiments will be described in more detail with reference to the drawings.

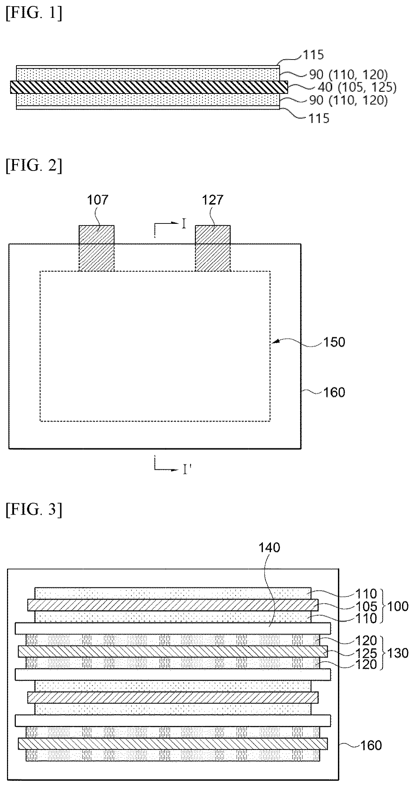

FIG. 1 is a schematic cross-sectional view illustrating an electrode according to an exemplary embodiment.

FIGS. 2 and 3 are schematic plan and cross-sectional views, respectively, illustrating a lithium secondary battery according to exemplary embodiments.

As shown in FIG. 1, the electrode for a lithium secondary battery according to exemplary embodiments may include: an electrode current collector 40; an electrode active material layer 90 formed on the electrode current collector 40; and a coating layer 115 formed on the electrode active material layer 90.

The electrode active material layer 90 may be formed on one surface of the electrode current collector 40, or alternatively may be formed on both surfaces (e.g., the upper and lower surfaces).

For example, the coating layer 115 may be formed in direct contact with the electrode active material layer 90. Accordingly, the energy density of the lithium secondary battery may be further improved.

In some embodiments, the coating layer 115 may be formed to entirely cover the electrode active material layer 90, or may be formed to cover at least a portion of the electrode active material layer 90.

In some embodiments, the coating layer 115 may be formed discontinuously on the surface of the electrode active material layer 90. For example, the coating layer 115 may exist in the island-like form in a localized region of the outer surface of the electrode active material layer 90.

In some embodiments, the electrode active material may include a plurality of active material particles and a coating portion formed on the surfaces of the active material particles, and the coating layer 115 may be formed by the coating portion exposed to the outer surface of the electrode active material layer 90.

In some embodiments, the electrode for a lithium secondary battery may be applied to an anode. For example, the electrode current collector 40 may be an anode current collector 125, and the electrode active material layer 90 may be an anode active material layer 120.

In some embodiments, the active material particles may include graphite-based particles. For example, the graphite-based particles may be natural graphite, graphitized coke, graphitized MCMB, or graphitized MPCF.

In some embodiments, the electrode for a lithium secondary battery may be applied to a cathode. For example, the electrode current collector 40 may be a cathode current collector 105, and the electrode active material layer 90 may be a cathode active material layer 110.

In some embodiments, the electrode for a lithium secondary battery may satisfy Equation 1 below.

[Equation 1]

$$R_a \leq 30 \text{ nm}$$

In Equation 1, $R_a$ may be an average value obtained by measuring the arithmetic average roughness 15 times within a scan range of 0.5 $\mu$m $\times$ 0.5 $\mu$m on the outer surface of the coating layer115 using an atomic force microscope (AFM), and then removing the maximum and minimum values.

For example, the coating layer 115 may include a material with low electron conductivity, which hinders electron migration between the electrode and the electrolyte and prevents oxidation/reduction reactions, and high lithiumion conductivity, which facilitates lithium charge/discharge reactions, and may be formed on the surface of the electrode.

For example, when the coating layer 115 is formed on the electrode active material layer 90, the surface of the electrode for a lithium secondary battery may become smoother, thereby reducing the surface roughness measured by AFM.

Consequently, side reactions between the electrode and the electrolyte may be reduced and the formation of a solid electrolyte interphase (SEI) may be suppressed, thereby increasing the initial efficiency of the lithium secondary battery and suppressing swelling. For example, by suppressing side reactions caused by overvoltage, the cycle life during high-rate charging may be improved, and the adhesion of the electrode may be enhanced.

If $R_a$ exceeds 30 nm, gas generation due to side reactions between the electrode and the electrolyte may not be sufficiently suppressed, potentially causing the lithium secondary battery to swell.

In some embodiments, the electrode for a lithium secondary battery may satisfy Equation 2 below.

$$[Equation\ 2]$$

$$R_a \leq 25\ nm$$

In Equation 2, the definition of $R_a$ may be the same as that in Equation 1.

For example, $R_a$ may be controlled within a predetermined range by adjusting the amount of the coating material included in the coating layer 115. For example, the coating material may be a material that facilitates lithium charge/-discharge reactions while suppressing oxidation/reduction reactions, and as the amount of the coating material increases, the surface roughness of the surface on which the coating layer 115 is formed may decrease.

In one embodiment, $R_a$ of the electrode for a lithium secondary battery may be 1 to 30 nm, 3 to 30 nm, 5 to 30 nm, 10 to 30 nm, 1 to 25 nm, 3 to 25 nm, 5 to 25 nm, or 10 to 25 nm. The definition of $R_a$ may be the same as that in Equation 1.

Within the above range, the amount of coating material included in the coating layer 115 may be appropriately adjusted, so that gas generation in the lithium secondary battery may be suppressed and the initial efficiency and capacity properties may be improved.

In some embodiments, the coating layer 115 may include at least one coating material selected from the group consisting of a polymer, an alkali metal salt, and a compound excluding the alkali metal salt.

For example, the coating material may be insoluble in the electrolyte, have high thermal and chemical stability, possess a wide electrochemical stability window (ESW) that prevents oxidation/reduction reactions, and have high strength, thereby being less susceptible to external impacts.

For example, the coating material may have low electronic conductivity, thereby blocking electron migration between the electrode and the electrolyte, and high lithium-ion conductivity, thereby facilitating the transport of lithium ions.

For example, the coating layer 115 may be composed of a polymer, an alkali metal salt, or a compound excluding the alkali metal salt.

The coating layer 115 may be composed of an organic/inorganic hybrid material. For example, the coating layer may be composed of a polymer and an alkali metal salt, may be composed of a compound excluding the alkali metal salt, and a polymer, or may be composed of a polymer, an alkali metal salt, and a compound excluding the alkali metal salt.

In some embodiments, the polymer may include at least one of polyvinyl alcohol (PVA), polyethyleneoxide (PEO), polyvinylidene fluoride (PVDF), polyoxazoline (POZ), polymethyl methacrylate (PMMA), Nafion, poly(diallyldimethylammonium chloride) (PDDA), polystyrene sulfonate (PSS), polyethyleneimine (PEI), polyacrylamide (PAM), polystyrene (PS), polyacrylic acid (PAA), polyvinylpyridine and polyvinylpyrrolidone (PVP).

In some embodiments, the alkali metal salt may include at least one of $LiCl$, $LiF$, $LiI$, $LiPO_4$, $LiBO_2$, $LiIO_2$, $Li_2CO_3$, $Li_2B_4O_7$, $Li_2SO_4$, $LiPF_6$, $LiBF_4$, $LiSbF_6$, $LiAsF_6$, $LiClO_4$, $LiCF_3SO_3$, $LiN(SO_2F)_2$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $C_7H_5LiO_2$ (lithium benzoate), $LiAlO_4$ and $LiAlCl_4$.

In some embodiments, the compound excluding the alkali metal salt may include at least one of $Al(NO_3)_3$, aluminum oxide, zinc nitride, boron trioxide, ascorbic acid, crown ether and tannic acid.

In some embodiments, the content of the coating material may be 0.01 to 5% by weight ("wt%") based on the total weight of the electrode active material. Within the above range, the surface roughness of the surface on which the coating layer 115 is formed may be reduced to an appropriate range, so that $R_a$ may satisfy the above-described range. Accordingly, the initial efficiency and cycle life properties of the lithium secondary battery may be improved, and swelling due to gas generation may be suppressed.

In some embodiments, the coating layer 115 may include a polymer as a coating material, and the content of the polymer may be 0.01 to 2 wt% based on the total weight of the electrode active material. Within the above range, side reactions and SEI formation between the electrode and the electrolyte may be reduced, and cycle life properties may be improved during high-rate charging.

In some embodiments, the coating layer 115 may further include an alkali metal salt as a coating material or a compound excluding the alkali metal salt, and the content of the alkali metal salt or the compound excluding the alkali metal salt may be 0.05 to 1 wt% based on the total weight of the electrode active material. Within the above range, gas generation may be reduced, thereby suppressing the swelling of the lithium secondary battery and improving initial efficiency.

In some embodiments, the coating layer 115 may have a thickness of 1 to 10,000 nm, for example, 3 to 8,000 nm, 5 to 5,000 nm, 8 to 3,000 nm, or 10 to 1,000 nm. Within the above range, side reactions between the electrode and the electrolyte may be suppressed, while preventing a reduction in cycle life due to overvoltage during high-rate charging.

The above-described electrode according to exemplary embodiments may be applied to at least one of a cathode and an anode of the lithium secondary battery.

In one embodiment, to improve the overall thickness and energy density of the battery, the above-described electrode may be applied to only one of the cathode and the anode.

Hereinafter, a lithium secondary battery according to exemplary embodiments will be described in more detail with reference to FIGS. 2 and 3. For convenience of description, a case where the above-described electrode is applied to an anode will be described as an example. However, as described above, the above-described electrode may be applied to a cathode, or may be applied to both the anode and the cathode.

Referring to FIGS. 2 and 3, a lithium secondary battery may include an electrode assembly including a cathode 100, an anode 130, and a separation membrane 140 interposed between the cathode and the anode. The electrode assembly may be accommodated in a case 160 together with an electrolyte to be impregnated.

The cathode 100 may include the cathode active material layer 110 formed by applying a slurry including a cathode active material to the cathode current collector 105.

The cathode active material layer 110 may be formed on one surface or both surfaces (e.g., the upper and lower surfaces) of the cathode current collector 105.

The cathode active material layer 110 may include a cathode active material, and, if necessary, a cathode binder and a conductive material.

The cathode 100 may be prepared by, for example, mixing and stirring the cathode active material, the cathode binder, and the conductive material, etc. in a dispersion medium to prepare a cathode slurry, and then applying the cathode slurry to the cathode current collector 105, followed by drying and roll-pressing.

The cathode current collector 105 may include stainless steel, nickel, aluminum, titanium, copper, or an alloy thereof, and for example, may include aluminum or an aluminum alloy.

The cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Formula 1 below.

$$[\text{Formula 1}] \qquad Li_xNi_{1-y}M_yO_{2+z}$$

In Formula 1, x, y and z may satisfy $0.9 \leq x \leq 1.2$, $0 \leq y \leq 0.7$, and $-0.1 \leq z \leq 0.1$. M may include one or more elements selected from Na, Mg, Ca, Y, Ti, Zr, Hf, V, Nb, Ta, Cr, Mo, W, Mn, Co, Fe, Cu, Ag, Zn, B, Al, Ga, C, Si and Sn

In some embodiments, the molar ratio or concentration of Ni, represented by (1-y), in Formula 1 may be 0.8 or more, and for example, greater than 0.8.

In some embodiments, the cathode active material may include a lithium metal oxide, and for example, may include a lithium (Li)-nickel (Ni)-based oxide or a lithium iron phosphate (LFP) compound.

For example, the cathode binder may include an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR). In addition, the cathode binder may be used together with a thickener such as carboxymethyl cellulose (CMC).

The conductive material may be included to promote electron migration between the active material particles. For example, the conductive material may include carbon-based conductive materials such as graphite, carbon black, graphene, or carbon nanotubes and/or metal-based conductive materials, including perovskite materials, such as tin, tin oxide, titanium oxide, $LaSrCoO_3$, and $LaSrMnO_3$, etc.

The anode 130 may include the anode current collector 125, the anode active material layer 120 on the anode current collector 125, and a coating layer (not shown in FIG. 3) on the anode active material layer 120.

The anode active material layer 120 may be formed on one surface or both surfaces (e.g., the upper and lower surfaces) of the anode current collector 125.

The anode active material layer 120 may include an anode active material, and, if necessary, an anode binder and a conductive material.

For example, the anode 130 may be prepared by mixing and stirring the anode active material, the anode binder, the conductive material, etc. in a solvent to prepare an anode slurry, and then applying the anode slurry to the anode current collector 125, followed by drying and roll-pressing.

For example, the above-described coating material may be further included in the mixture and mixed and stirred during the preparation of the anode slurry. Accordingly, the anode active material may include a plurality of anode active material particles and a coating portion formed on the surfaces of the anode active material particles, and a coating layer may be formed on the outer surface of the anode active material layer 120 by the coating portion exposed thereto.

The anode current collector 125 may include gold, stainless steel, nickel, aluminum, titanium, copper, or an alloy thereof, and for example, may include copper or a copper alloy.

The anode active material may be a material capable of absorbing and desorbing lithium ions. The anode active material may include, for example, a carbon-based anode active material, a silicon-based anode active material, a lithium alloy or the like.

The carbon-based anode active material may include, for example, crystalline carbon, amorphous carbon, a carbon composite, or carbon fibers.

The amorphous carbon may include, for example, hard carbon, coke, mesocarbon microbead (MCMB) calcined at 1500°C or lower, mesophase pitch-based carbon fiber (MPCF) or the like. For example, the crystalline carbon may include natural graphite, graphitized coke, graphitized MCMB, graphitized MPCF or the like.

The silicon-based anode material may include, for example, Si, $SiO_x$ (0<x<2), Si/C, SiO/C, Si-metal or the like.

The lithium alloy may include, for example, metal elements such as aluminum, zinc, bismuth, cadmium, antimony, silicon, lead, tin, gallium, and indium.

The anode binder and the conductive material may be substantially the same as or similar to the above-described cathode binder and the conductive material. For example, the anode binder may be an aqueous binder such as styrene-butadiene rubber (SBR), and may be used together with a thickener such as carboxymethyl cellulose (CMC).

The solvent may be an aqueous solvent such as water, an aqueous hydrochloric acid solution, or an aqueous sodium hydroxide solution.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

In some embodiments, the anode 130 may have an area (e.g., a contact area with the separation membrane 140) and/or volume larger than those/that of the cathode 100. Thereby, lithium ions generated from the cathode 100 may smoothly migrate to the anode 130 without being precipitated during the migration process, for example. As a result, the effects of simultaneously improving output and stability may be more easily achieved.

According to exemplary embodiments, an electrode cell is defined by the cathode 100, the anode 130 and the separation membrane 140, and a plurality of electrode cells may be stacked to form, for example, a jelly roll type electrode assembly 150. For example, the electrode assembly 150 may be formed by winding, stacking, z-folding, or stack-folding the separation membrane 140.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, tetrahydrofuran, and the like may be used. These compounds may be used alone or in combination of two or more thereof.

As shown in FIG. 2, electrode tabs (cathode tabs and anode tabs) may be formed from the cathode current collector 105 and the anode current collector 125, each belonging to a respective electrode cell, and may extend to one side of the case 160. The electrode tabs may be welded together with the one side of the case 160 to form electrode leads (a cathode lead 107 and an anode lead 127) that extend from or are exposed to the outside of the case 160.

The lithium secondary battery may be manufactured, for example, in a cylindrical shape using a can, a prismatic shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

## Example 1

### (1) Preparation of anode having a coating layer formed thereon

20 g of artificial graphite as an anode active material, 0.1 g of polyvinyl alcohol as a coating material (0.5 wt% based on the total weight of the anode active material), 0.2 g of CMC, 0.05 g of carbon nanotubes(CNT), and 0.3 g of SBR were mixed in 20 g of water as a solvent. The mixture was stirred for 5 minutes using a planetary mixer (manufactured by Thinky) to prepare an anode slurry. The anode slurry was uniformly applied to a copper foil with a thickness of 15 $\mu$m and dried to prepare an anode having a coating layer with a thickness of 10 nm formed thereon.

### (2) Preparation of cathode

$Li(Ni_{0.8}Co_{0.1}Mn_{0.1})O_2$ cathode active material, carbon black, and PVDF were mixed in a weight ratio of 92:5:3 to prepare a cathode slurry. The cathode slurry was uniformly applied to an aluminum foil with a thickness of 15 $\mu$m and dried to produce a cathode.

### (3) Manufacture of lithium secondary battery

An electrode assembly was formed by interposing a separation membrane (polyethylene) between the cathode and the anode. Next, a cathode lead and an anode lead were welded to the protruding portions (cathode tab) of the cathode and the protruding portions (anode tab) of the anode, respectively.

The electrode assembly was placed inside a pouch (case) so that some regions of the cathode lead and anode lead were exposed to the outside, and three sides, except for the electrolyte injection side, were sealed.

After the electrolyte was injected and the electrolyte injection side was also sealed, a lithium secondary battery was manufactured allowing to stand for 12 hours for electrolyte impregnation.

The electrolyte used herein was prepared by making a 1 M $LiPF_6$ solution (EC/EMC/DEC mixed solvent in a volume ratio of 25:30:45), and then adding and mixing 1 wt% fluoroethylene carbonate (FEC), 0.3 wt% vinylene carbonate (VC), 1.0 wt% lithium difluorophosphate ($LiPO_2F_2$), 0.5 wt% 1,3-propane sultone (PS), and 0.5 wt% prop-1-ene-1,3-sultone (PRS), based on the total weight of the electrolyte.

## Example 2

An anode, cathode, and lithium secondary battery were manufactured in the same manner as in Example 1, except that 0.4 g of polyvinyl alcohol (2 wt% based on the total weight of the anode active material) was used as a coating material instead of 0.1 g.

## Example 3

An anode, cathode, and lithium secondary battery were manufactured in the same manner as in Example 1, except that 0.1 g of lithium benzoate (0.5 wt% based on the total weight of the anode active material) was used as a coating material instead of 0.1 g of polyvinyl alcohol.

## Example 4

An anode, cathode, and lithium secondary battery were manufactured in the same manner as in Example 1, except that 0.1 g of $Al(NO_3)_3$ (0.5 wt% based on the total weight of the anode active material) was used as a coating material instead of 0.1 g of polyvinyl alcohol.

## Example 5

An anode, cathode, and lithium secondary battery were manufactured in the same manner as in Example 1, except that 0.05 g of polyethyleneoxide (PEO) and 0.05 g of lithium benzoate (0.25 wt% and 0.25 wt%, respectively, based on the total weight of the anode active material) were used as a coating material instead of 0.1 g of polyvinyl alcohol.

### Comparative Example 1

The same procedure as in Example 1 was performed, except that 0.1 g of polyvinyl alcohol as the coating material was not used. Therefore, an anode, cathode, and lithium secondary battery without a coating layer were manufactured instead of the anode of Example 1.

### Comparative Example 2

An anode, cathode, and lithium secondary battery were manufactured in the same manner as in Example 1, except that 1.2 g of polyvinyl alcohol (6 wt% based on the total weight of the anode active material) was used as a coating material instead of 0.1 g.

The types and contents of the coating materials used in the above-described examples and comparative examples are shown in Table 1 below.

[TABLE 1]

| Classification | Type of coating material | Content of coating material based on total weight of electrode active material (wt%) |
|---|---|---|
| Example 1 | Polyvinyl alcohol | 0.5 |
| Example 2 | Polyvinyl alcohol | 2 |
| Example 3 | Lithium benzoate | 0.5 |
| Example 4 | $Al(NO_3)_3$ | 0.5 |
| Example 5 | PEO and Lithium benzoate | 0.5(0.25+0.25) |
| Comparative Example 1 | None | 0 |
| Comparative Example 2 | Polyvinyl alcohol | 6 |

### Experimental Example

#### (1) Measurement of surface roughness

For the anodes manufactured according to the above-described examples and comparative examples, the arithmetic average roughness was measured within a scan range of 0.5 $\mu$m $\times$ 0.5 $\mu$m using an atomic force microscope (AFM) on the outer surface of the coating layer. However, for Comparative Example 1, where no coating layer was formed, the surface roughness was measured on the outer surface of the anode active material in the same manner as described above.

According to the above-described method, the surface roughness was measured 15 times, and the average value of the values obtained after removing the maximum and minimum values was used as the $R_a$ of the examples and comparative examples.

#### (2) Measurement of gas generation amount

For the lithium secondary batteries manufactured according to the above-described examples and comparative examples, the gas volume (mL) generated after the initial charge/discharge cycle was measured, and the results are shown in Table 2 below.

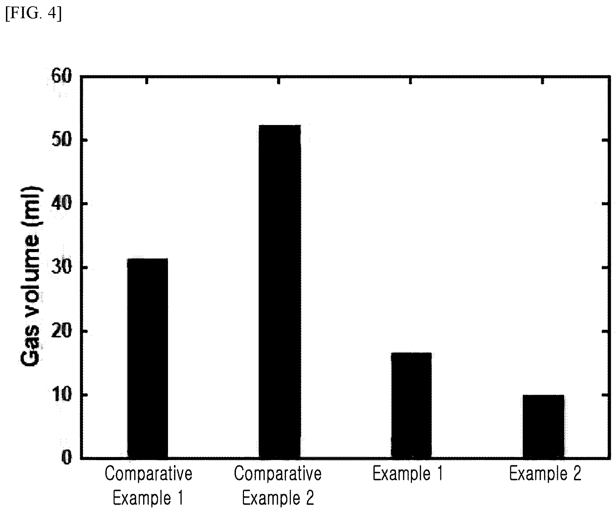

In addition, the results of measuring the gas generation amount of the lithium secondary batteries according to Examples 1 and 2 and Comparative Examples 1 and 2 are graphically presented in FIG. 4.

Referring to FIG. 4, the lithium secondary batteries according to Examples 1 and 2 exhibit a lower gas generation amount than those according to Comparative Examples 1 and 2.

#### (3) Measurement of capacity retention (cycle life properties) during repeated charging and discharging

After performing 600 cycles of charging (CC/CV, 0.5C, 4.2 V, 0.01C cut-off) and discharging (CC, 0.5C, 2.5 V cut-off) on the lithium secondary batteries prepared according to the above-described examples and comparative examples, the capacity retention was evaluated by expressing the discharge capacity at the 600th cycle as a percentage of the discharge capacity at the first cycle.

The measurement results according to the above-described experimental examples are shown in Table 2 below.

[TABLE 2]

| Classification | $R_a$ (nm) | Gas generation amount (mL) | Capacity retention (%) |
|---|---|---|---|
| Example 1 | 23 | 16.7 | 81.2 |
| Example 2 | 15 | 10 | 82.1 |
| Example 3 | 13 | 11 | 83.3 |
| Example 4 | 15 | 15 | 82.5 |
| Example 5 | 15 | 12 | 82.7 |
| Comparative Example 1 | 41 | 31.5 | 80.5 |
| Comparative Example 2 | 35 | 52.3 | 65.3 |

Referring to Tables 1 and 2, the lithium secondary batteries including the anodes of Examples 1 to 5, which satisfied Equation 1 ($R_a \leq 30$ nm), exhibited suppressed gas generation and high capacity retention.

However, the lithium secondary batteries including the anodes of Comparative Examples 1 and 2, which did not satisfy Equation 1 ($R_a \leq 30$ nm), exhibited high gas generation and low capacity retention.

**Claims**

1. An electrode for a lithium secondary battery comprising:

   an electrode current collector;
   an electrode active material layer formed on the electrode current collector and comprising an electrode active material; and
   a coating layer formed on the electrode active material layer,
   wherein the electrode satisfies Equation 1 below:

   [Equation 1]

   $$R_a \leq 30 \text{ nm}$$

   (in Equation 1, $R_a$ is an average value obtained by measuring the arithmetic average roughness 15 times within a scan range of 0.5 $\mu$m $\times$ 0.5 $\mu$m on an outer surface of the coating layerusing an atomic force microscope (AFM), and then removing the maximum and minimum values).

2. The electrode for a lithium secondary battery according to claim 1, wherein the coating layer is in direct contact with the electrode active material layer.

3. The electrode for a lithium secondary battery according to claim 1, wherein the coating layer is discontinuously formed on the surface of the electrode active material layer.

4. The electrode for a lithium secondary battery according to claim 1, wherein the electrode active material comprises a plurality of active material particles and a coating portion formed on surfaces of the active material particles, and the coating layer is formed by the coating portion exposed on an outer surface of the electrode active material layer.

5. The electrode for a lithium secondary battery according to claim 4, wherein the active material particles comprise graphite-based particles.

6. The electrode for a lithium secondary battery according to claim 1, wherein the coating layer has a thickness of 1 to 10,000 nm.

7. The electrode for a lithium secondary battery according to claim 1, wherein the electrode satisfies Equation 2 below:

[Equation 2]

$$R_a \leq 25 \text{ nm}$$

(in Equation 2, $R_a$ is an average value obtained by measuring the arithmetic average roughness 15 times within a scan range of 0.5 $\mu$m $\times$ 0.5 $\mu$m on the outer surface of the coating layerusing an atomic force microscope (AFM), and then removing the maximum and minimum values).

8. The electrode for a lithium secondary battery according to claim 1, wherein the coating layer comprises at least one coating material selected from the group consisting of a polymer, an alkali metal salt, and a compound excluding the alkali metal salt.

9. The electrode for a lithium secondary battery according to claim 8, wherein the polymer comprises at least one of polyvinyl alcohol (PVA), polyethyleneoxide (PEO), polyvinylidene fluoride (PVDF), polyoxazoline (POZ), polymethyl methacrylate (PMMA), Nafion, poly(diallyldimethylammonium chloride) (PDDA), polystyrene sulfonate (PSS), polyethyleneimine (PEI), polyacrylamide (PAM), polystyrene (PS), polyacrylic acid (PAA), polyvinylpyridine and polyvinylpyrrolidone (PVP).

10. The electrode for a lithium secondary battery according to claim 8, wherein the alkali metal salt comprises at least one of LiCl, LiF, LiI, $LiPO_4$, $LiBO_2$, $LiIO_2$, $Li_2CO_3$, $Li_2B_4O_7$, $Li_2SO_4$, $LiPF_6$, $LiBF_4$, $LiSbF_6$, $LiAsF_6$, $LiClO_4$, $LiCF_3SO_3$, $LiN(SO_2F)_2$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $C_7H_5LiO_2$ (lithium benzoate), $LiAlO_4$ and $LiAlCl_4$.

11. The electrode for a lithium secondary battery according to claim 8, wherein the compound excluding the alkali metal salt comprises at least one of $Al(NO_3)_3$, aluminum oxide, zinc nitride, boron trioxide, ascorbic acid, crown ether and tannic acid.

12. The electrode for a lithium secondary battery according to claim 8, wherein the content of the coating material is 0.01 to 5% by weight based on the total weight of the electrode active material.

13. The electrode for a lithium secondary battery according to claim 8, wherein the coating layer comprises the polymer, and the content of the polymer is 0.01 to 2% by weight based on the total weight of the electrode active material.

14. The electrode for a lithium secondary battery according to claim 13, wherein the coating layer further comprises the alkali metal salt or a compound excluding the alkali metal salt, and the content of the alkali metal salt or the compound excluding the alkali metal salt is 0.05 to 1% by weight based on the total weight of the electrode active material.

15. A lithium secondary battery comprising an anode and a cathode disposed to face the anode, wherein at least one of the anode and the cathode is the electrode for a lithium secondary battery according to claim 1.

[FIG. 1]

115
90 (110, 120)
40 (105, 125)
90 (110, 120)
115

[FIG. 2]

107

127

I

150

160

I'

[FIG. 3]

140

110
105  100
110

120
125  130
120

160

[FIG. 4]

## INTERNATIONAL SEARCH REPORT

| | International application No. |
| --- | --- |
| | **PCT/KR2024/095124** |

| A. | CLASSIFICATION OF SUBJECT MATTER |
| --- | --- |

**H01M 4/133**(2010.01)i; **H01M 4/36**(2006.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/133(2010.01); H01M 10/04(2006.01); H01M 10/052(2010.01); H01M 4/13(2010.01); H01M 4/1393(2010.01); H01M 4/583(2010.01); H01M 4/60(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지용 전극(electrode for a secondary battery), 리튬 이차 전지(lithium secondary battery), 코팅층(coating layer), 산술평균 거칠기(average roughness), 고분자(polymer), 알칼리염(alkali salt)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2016-0113829 A (LG CHEM, LTD.) 04 October 2016 (2016-10-04)<br>See paragraph [0028]; claims 1, 9-10 and 13-15. | 1-15 |
| Y | KR 10-2014-0032624 A (LG CHEM, LTD.) 17 March 2014 (2014-03-17)<br>See claims 1-3, 5, 7 and 11. | 1-15 |
| A | KR 10-2013-0061566 A (GS CALTEX CORPORATION) 11 June 2013 (2013-06-11)<br>See entire document. | 1-15 |
| A | KR 10-1723993 B1 (POSCO CHEMTECH CO., LTD. et al.) 07 April 2017 (2017-04-07)<br>See entire document. | 1-15 |
| A | US 2015-0140423 A1 (NEXEON LIMITED) 21 May 2015 (2015-05-21)<br>See entire document. | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 May 2024** | **30 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 675 697 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2016-0113829 | A | 04 October 2016 | KR | 10-1854010 | B1 | 02 May 2018 |
| | | | | US | 10431829 | B2 | 01 October 2019 |
| | | | | US | 2017-0040616 | A1 | 09 February 2017 |
| | | | | WO | 2016-153136 | A1 | 29 September 2016 |
| KR | 10-2014-0032624 | A | 17 March 2014 | KR | 10-1540618 | B1 | 30 July 2015 |
| KR | 10-2013-0061566 | A | 11 June 2013 | KR | 10-1349066 | B1 | 08 January 2014 |
| KR | 10-1723993 | B1 | 07 April 2017 | KR | 10-2014-0093877 | A | 29 July 2014 |
| US | 2015-0140423 | A1 | 21 May 2015 | CN | 104471752 | A | 25 March 2015 |
| | | | | EP | 2856537 | A1 | 08 April 2015 |
| | | | | JP | 2015-525437 | A | 03 September 2015 |
| | | | | KR | 10-2015-0027093 | A | 11 March 2015 |
| | | | | WO | 2013-175241 | A1 | 28 November 2013 |

Form PCT/ISA/210 (patent family annex) (July 2022)